(19) Europäisches Patentamt
European Patent Office
Office européen des brevets

(11) **EP 0 492 359 B1**

(12) **EUROPEAN PATENT SPECIFICATION**

(45) Date of publication and mention
of the grant of the patent:
**19.03.1997 Bulletin 1997/12**

(51) Int Cl.6: **G11B 11/10**, G11B 13/04

(21) Application number: **91121584.6**

(22) Date of filing: **17.12.1991**

(54) **Magneto-optical recording medium**

Magnetooptischer Aufzeichnungsträger

Milieu magnéto-optique d'enregistrement

(84) Designated Contracting States:
**DE FR GB**

(30) Priority: **20.12.1990 JP 412518/90**
**24.01.1991 JP 24119/91**

(43) Date of publication of application:
**01.07.1992 Bulletin 1992/27**

(73) Proprietor: **SONY CORPORATION**
**Tokyo (JP)**

(72) Inventors:
• **Tanaka, Shintaro**
**Shinagawa-ku Tokyo (JP)**
• **Shimouma, Takahashi**
**Shinagawa-ku Tokyo (JP)**
• **Aratani, Katsuhisa**
**Shinagawa-ku Tokyo (JP)**
• **Nakaoki, Ariyoshi**
**Shinagawa-ku Tokyo (JP)**

(74) Representative: **Müller, Frithjof E., Dipl.-Ing.**
**Patentanwälte**
**MÜLLER & HOFFMANN,**
**Innere Wiener Strasse 17**
**81667 München (DE)**

(56) References cited:
**EP-A- 0 210 855** **EP-A- 0 364 196**
**EP-A- 0 366 369** **EP-A- 0 376 375**
**JP-A-63 311 641**

## Description

## BACKGROUND OF THE INVENTION

Field of the Invention:

The present invention relates to a magneto-optic recording medium capable of enabling repeated overwrite, for example through the intensity modulation of a laser beam.

Description of the Prior Art:

Recording methods that enable rewriting information, namely, overwrite, among the magneto-optic recording and reproducing methods which utilize the mutual action of light and magnetism for reading information bits (magnetic domains), are classified roughly into recording methods of a magnetic field modulation system which modulate an external magnetic field applied to a magneto-optic recording medium, and recording methods of a duplex head system that employ an erasing head in addition to a recording head.

The recording method of a magnetic field modulation system such as disclosed in Japanese Patent Laid-open (Kokai) No. Sho 60-48806, incorporated herein, irradiates an overwriting location of an amorphous ferromagnetic thin film recording medium having its easy direction of magnetization perpendicular to the surface of the film with a laser beam to heat the overwriting location locally to record information on the amorphous ferromagnetic thin film recording medium. A magnetic field is applied having a polarity that is inverted according to the information being recorded, for example, "0" and "1", for recording by magnetization.

The recording method of the magnetic field modulation system, however, requires an electromagnet capable of operating at a high frequency for high-speed recording at a high information transfer rate, which causes problems in fabrication, power consumption, and heat generation.

The recording method of a duplex head type initializes the recording medium with an erasing head prior to overwriting. Since the two heads are spaced, the drive system requires complex work for assembling and fabrication, is large in size, and has economic problems.

Magneto-thermal (magneto-optic) recording methods have been proposed in Japanese Patent Laid-open (Kokai) Nos. Sho 63-52354, Sho 63-268103 and Hei 2-24801, incorporated herein, to solve those problems.

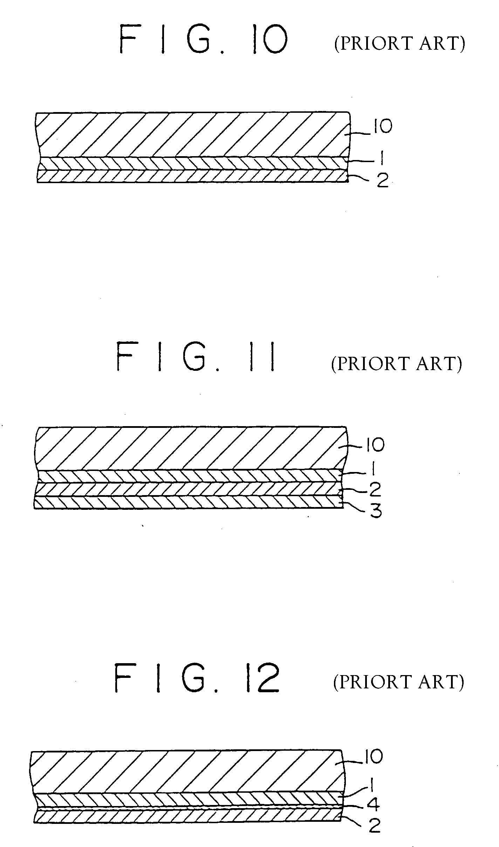

The recording method disclosed in Japanese Patent Laid-open (Kokai) No. Sho 63-52354, incorporated herein, employs a magnetic recording medium having a fundamental construction as shown in a sectional view in Figure 10. This magnetic recording medium comprises, in a laminated construction, a substrate 10, a first magnetic thin film 1 of an amorphous rare earth metal-transition metal magnetic thin film forming a vertically magnetizable memory layer, and a second magnetic thin film 2 of an amorphous rare earth metal-transition metal film forming a recording layer formed over and magnetically coupled with the first magnetic thin film 1. A first external magnetic field is applied to the magnetic recording medium and the magnetic recording medium is heated to a first heated state in which the magnetic recording medium is heated to a first temperature $T_1$ not lower than the Curie temperature $T_{c1}$ of the first magnetic thin film 1 and not high enough to invert the sublattice magnetization of the second magnetic thin film 2. Alternatively, it is heated to a second heated state in which the magnetic recording medium is heated to a second temperature $T_2$ lower than the Curie temperature $T_{c1}$ and high enough to invert the sublattice magnetization of the second magnetic thin film 2 according to information to be recorded, for example "0" or "1". The direction of sublattice magnetization of the first magnetic thin film 1 is aligned with that of the sublattice magnetization of the second magnetic thin film 2 by the exchange coupling force between the first magnetic thin film 1 and the second magnetic thin film 2 in a cooling process to form, for example, recording bits (magnetic domains) of "0" and "1" in the first magnetic thin film 1. An overwrite enable state is created by applying a second external magnetic field to the magnetic recording medium or only by applying the first external magnetic field at room temperature to the magnetic recording medium having the second magnetic thin film 2 of a composition having its compensation temperature in the range of room temperature, and heating to the second temperature $T_2$ to invert the sublattice magnetization of the second magnetic thin film 2 in the direction in the initial state, namely, in the normal direction.

This recording method does not require any special process (time) for erasing, enables high-speed recording at a high transfer rate, and solves the problems in the recording method of a duplex head system or the recording method of an external magnetic field modulation system.

The recording method disclosed in Japanese patent Laid-open (Kokai) No. Sho 63-268103, incorporated herein, omits the use of the second magnetic field or reduces the second magnetic field and simplifies the apparatus for carrying out the recording method. This recording method employs a magnetic recording medium having a fundamental construction as shown in Figure 11 in a sectional view. This magnetic recording medium comprises, in addition to the memory layer, i.e. the first magnetic thin film, and the recording layer, i.e. the second magnetic thin film shown in Figure 10, a vertically magnetizable third magnetic thin film 3 of a rare earth metal-transition metal thin film, wherein the first, second, and third magnetic thin films are magnetically coupled. This recording method applies an external magnetic field $H_{ex}$ substantially perpendicular to the surface of the film to the magnetic recording medium. In a first heated state, the magnetic recording medium is heated to a first temperature $T_1$ not higher than the Curie temperature $T_{c1}$ of the first magnetic thin film 1. This temperature is high enough to hold the direction of sublattice magnetization of the transition metal of the second magnetic thin film 2 in a predetermined direction, i.e. the normal direction. Alternatively, in a second heated state, the magnetic recording medium is heated to a second temperature $T_2$ not lower than the Curie temperature $T_{c1}$ of the first magnetic thin film 1. This temperature is high enough to invert the direction of sublattice magnetization of the transition metal of the second magnetic thin film 2 in the reverse direction according to information to be recorded, for example, "0" or "1". The direction of sublattice magnetization of the second magnetic thin film 2 is aligned with that of sublattice magnetization of the third magnetic thin film 3 in a cooling process from the first and second heated states by keeping the direction of sublattice magnetization of the third magnetic thin film 3 in the normal direction, and without inverting the direction of sublattice magnetization of the first magnetic thin film 1. Since the direction of sublattice magnetization of the second magnetic thin film 2 is aligned with the direction of sublattice magnetization of the third magnetic thin film 3, i.e. the normal direction, the external magnetic field can be omitted or reduced.

The recording method disclosed in Japanese Patent Laid-open (Kokai) No. Hei 2-24801, incorporated herein, employs a magnetic recording medium of a fundamental construction as shown in Figure 12 in a sectional view. This magnetic recording medium comprises, in addition to the first magnetic thin film 1 and the second magnetic thin film 2 of the magnetic recording medium shown in Figure 10 employed in the recording method disclosed in Japanese Patent Laid-open (Kokai) No. Sho 63-52354, incorporated herein, an intermediate magnetic thin film 4 for controlling the domain wall energy formed between the first magnetic thin film 1 and the second magnetic thin film 2 to ensure the inversion of the direction of sublattice magnetization of the second magnetic thin film 2 in the normal direction.

Each of the foregoing magneto-thermal (magneto-optic) recording methods heats the magnetic recording medium in the first heated state and in the second heated state to record information represented by "0" and "1" by modulating the power of the laser beam. When the magnetic recording medium is heated in these two heated states for recording, the switching temperature is relatively high, the magnetic thin films are crystallized by repetitive heating at a high temperature, and atoms of the magnetic thin films diffuse into the adjacent magnetic thin films to reduce the lifetime of the magnetic recording medium. Particularly, the unstable magnetization of the first magnetic thin film serving as a memory layer makes stable overwriting impossible and deteriorates the reliability of the magnetic recording medium.

EP-A-0 210 855 discloses a magneto-optic recording medium having a substrate and only a single magnetic layer formed thereon. The magnetic layer has a multilayer structure in which rare earth metal element layers and transition metal element layers are alternately superposed with each other, with a layer thickness of the order of an atomic layer.

Patent Abstracts of Japan (JP-A-63-311641) discloses a magnetooptical recording medium having a substrate and two magnetic layers formed thereon. At least the magnetic layer not adjacent to the substrate has a multilayer structure in which rare earth metal element layers and transition metal element layers are alternately superposed with each other.

## SUMMARY OF THE INVENTION

Accordingly, it is an object of the present invention to solve the problems in the thermal reliability and lifetime of a magneto-optic recording medium comprising at least two magnetic thin films respectively forming the memory layer and the recording layer and to be heated in two heated states according to binary information to be recorded.

Another object of the present invention is to provide an improved magneto-optic recording medium.

The present invention provides a magneto-optical recording medium having the features of claim 1.

The first magnetic thin film 11, i.e. the memory layer having the alternating laminated construction of the rare earth metal layers and the transition metal layers, has improved the reliability of the magnetic recording medium and extended the lifetime of the same.

## BRIEF DESCRIPTION OF THE DRAWINGS

The above and other objects, features and advantages of the present invention will become more apparent from the following description taken in connection with the accompanying drawings, in which:

Figure 1 is a sectional view of a magneto-optic recording medium;
Figure 2 is a typical sectional view of a magnetic thin film;
Figure 3 is a plan view of a sputtering apparatus;
Figure 4 is a diagram showing states of magnetization;
Figure 5 is a graph showing the relation between the thickness and composition of a rare earth metal-transition metal thin film;
Figure 6 is a graph showing the variation of coercive force $H_c$ with the rare earth metal content;
Figure 7 is a graph showing measured numbers of possible recording cycles;
Figure 8 is a sectional view of a magneto-optic recording medium;
Figure 9 is a diagram showing states of magnetization;
Figure 10 is a sectional view of a conventional recording medium;

Figure 11 is a sectional view of a conventional recording medium; and

Figure 12 is a sectional view of a conventional recording medium.

## DESCRIPTION OF THE PREFERRED EMBODIMENTS

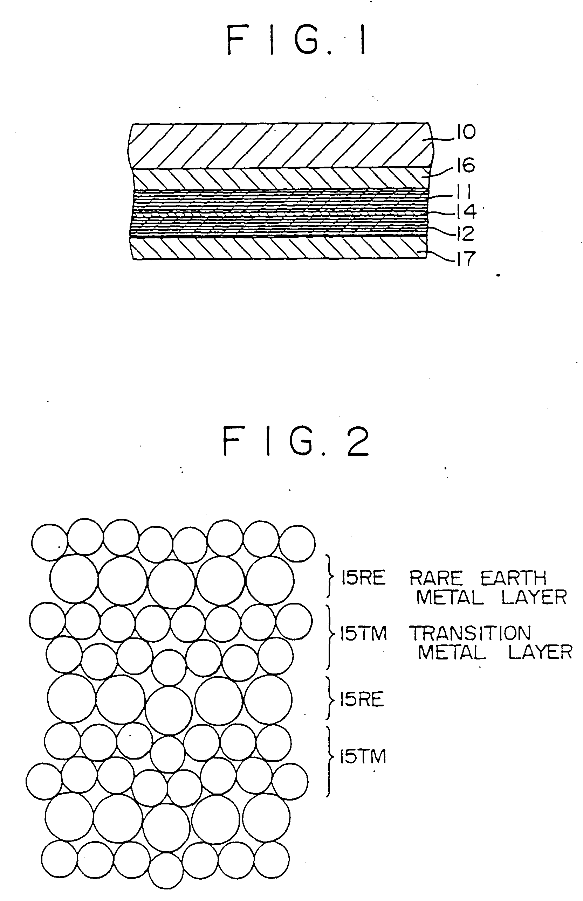

Referring to Figure 1, a magneto-optic recording medium in a first embodiment according to the present invention has a first magnetic thin film 11 forming a memory layer, and a second magnetic thin film 12 forming a recording layer. A transparent dielectric layer 16 that serves as a protective film or an interference film, such as a transparent SiN film of 800 Å in thickness, is formed on a light transmissive substrate 10, such as a glass substrate, an acrylic substrate, or a polycarbonate substrate. The first magnetic thin film 11, an intermediate thin film 14, and the second magnetic thin film 12 are formed sequentially in that order on the light transmissive substrate 10 coated with the dielectric layer 16 by sputtering. Then a protective film 17 of a nonmagnetic metal or a dielectric material, such as a SiN film of 800 Å in thickness, is formed over the second magnetic thin film 12.

The first magnetic thin film 11 and the second magnetic thin film 12 have an artificial lattice construction consisting of alternate laminations of rare earth metal layers 15RE and transition metal layers 15TM as typically shown in Figure 2. The first magnetic thin film 11 is formed in a general composition of, for example, $TbFeCo_7Cr_4$, and in a thickness of 300 Å, and the second magnetic thin film 12 is formed in a general composition of $GdTbFeCo_{30}Cr_4$, and in a thickness of 900 Å. The intermediate layer 14 is formed in a composition of, for example, $GdFeCo_7Cr_4$ and in a thickness of 100 Å.

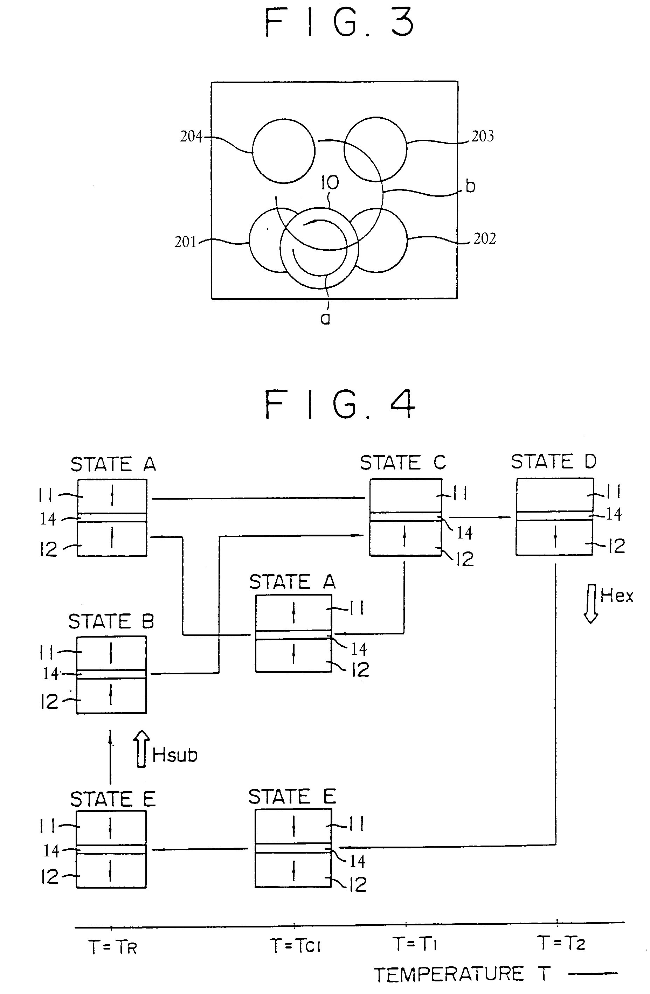

In forming the first magnetic thin film 11, the second magnetic thin film 12 and the intermediate layer 14, a sputtering apparatus provided with a four-element sputter gun using four kinds of targets 201, 202, 203 and 204 as shown in Figure 3 is used. The targets 201, 202, 203 and 204 are formed of $FeCo_{30}Cr_4$, $FeCo_7Cr_4$, Gd and Tb, respectively. The rotating substrate 10 rotating in the direction of an arrow **a** revolves in a circular course in the direction of an arrow **b** to sequentially pass sputtering positions corresponding to the targets 201, 202, 203 and 204. In forming the first magnetic thin film 11, only the second target 202 of $FeCo_7Cr_4$ and the fourth target 204 of Tb are used for sputtering to form the first magnetic thin film 11 in an alternate laminated construction of transition metal layers 15TM of $FeCo_7Cr_4$ and rare earth metal layers 15RE of Tb. Then, the second target 202 of $FeCo_7Cr_4$ and the third target 203 of Gd are used for sputtering to form the intermediate layer 14 of $GdFeCo_7Cr_4$. Subsequently, the first target of $FeCo_{30}Cr_4$, the third target 203 of Gd, and the fourth target 204 of Tb are used for sputtering to form the second magnetic thin film in an alternate laminated construction of rare earth metal layers 15RE of Gd and Tb, and transition metal layers 15TM of $FeCo_{30}Cr_4$.

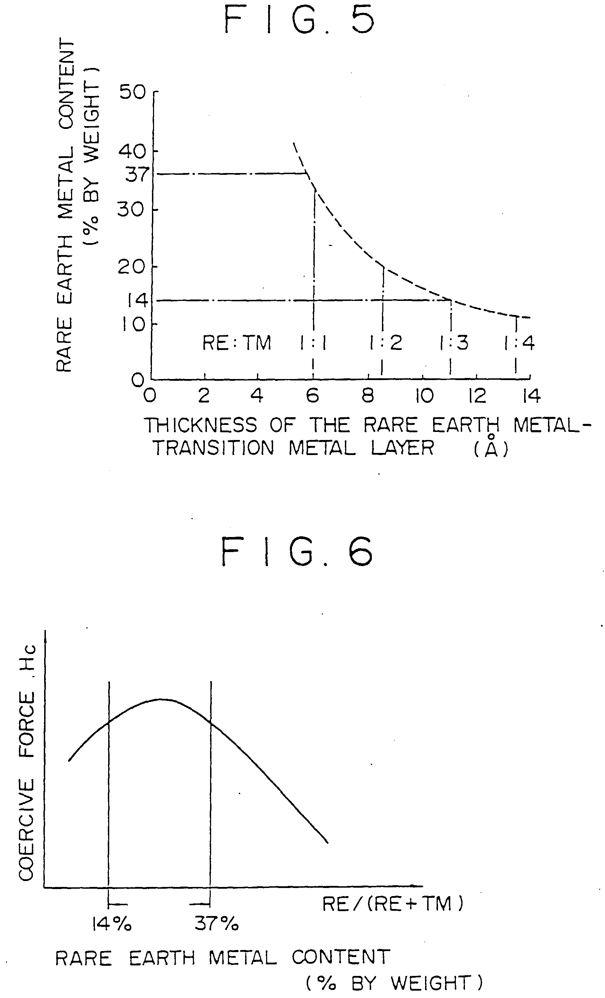

A recording method similar to that disclosed in Japanese Patent Laid-open (Kokai) No. Hei 2-24801, incorporated herein, is employed in recording information on the magneto-optic recording medium thus constructed according to the present invention. Figure 4 shows the transition of states of magnetization of the first magnetic thin film 11 and the second magnetic thin film 12 according to temperature T, in which directions of magnetization are indicated by arrows. At a room temperature $T_R$, the magneto-optic recording medium is magnetized in a state A in which the first magnetic thin film 11 and the second magnetic thin film 12 are magnetized in the same direction, or the magneto-optic recording medium is magnetized in a state B in which the respective directions of magnetization of the first magnetic thin film 11 and the second magnetic thin film 12 are reverse to each other, to record information represented by "0" or "1". In recording information, an external magnetic field $H_{ex}$ is applied to the magneto-optic recording medium and the magneto-optic recording medium is irradiated with a laser beam to heat the magneto-optic recording medium at a temperature $T_1$ or $T_2$. For example, a position of the magneto-optic recording medium in the state A is irradiated with a laser beam, and the intensity of the laser beam or duration of irradiation is controlled according to a signal to be recorded to heat the position in the state A at the first temperature $T_1$ not lower than the Curie temperature $T_{c1}$ of the first magnetic thin film 11 and not high enough to cause the inversion of the direction of magnetization of the second magnetic thin film 12 by the external magnetic field $H_{ex}$. Consequently, the transition of the state A to a state C occurs. In the state C, the first magnetic thin film 11 is demagnetized. When the temperature of the first magnetic thin film 11 and the second magnetic thin film 12 drops to the Curie temperature $T_{c1}$ of the first magnetic thin film 11 after the completion of heating, the first magnetic thin film 11 is magnetized in the same direction of magnetization as that of magnetization of the second magnetic thin film 12 owing to the dominant exchange coupling force between the first magnetic thin film 11 and the second magnetic thin film 12, namely, the magneto-optic recording medium is set in the state A, to record, for example, information represented by "0".

When the magneto-optic recording medium is heated at a second temperature $T_2$ not lower than the first temperature $T_1$ and high enough to cause the inversion of the direction of magnetization of the second magnetic thin film 12 by the external magnetic field $H_{ex}$, the first magnetic thin film 11 is demagnetized and the direction of magnetization of the second magnetic thin film 12 is inverted to create a state D. When the temperature of the first magnetic thin film 11 and the second magnetic thin film 12 drops to the Curie temperature $T_{c1}$ of the first magnetic thin film 11 after the completion of heating, a state E is created owing to the exchange coupling force between the first magnetic thin film 11 and the second magnetic thin film 12. In the state E the respective directions of magnetization of the first magnetic thin film 11 and the second magnetic thin film 12 are reverse to those of magnetization of the same in the initial state. In this state, an auxiliary external magnetic field $H_{sub}$ is applied to the magneto-optic recording medium at a temperature near the room temperature $T_R$ to invert the direction of magnetization of the second magnetic thin film 12. Consequently, a state B in which a predetermined magnetic domain wall is formed between the magnetic thin films 11 and 12 by the control of domain wall energy by the intermediate layer 14 and the direction of magnetization of the first magnetic thin film 11 is reverse to that of magnetization of the same in the state A, to record information represented by "1".

Thus, information represented by "0" and "1" is recorded by creating the state A and the state B. In either the state A or the state B, overwrite by light intensity modulation is possible. That is, when the magneto-optic recording medium in either the state A or the state B is heated at either the temperature $T_1$ or the temperature $T_2$, the magneto-optic recording medium is set in the state C, so that, as stated above, the temperature $T_1$ or the temperature $T_2$ is selected to overwrite information represented by "0" or "1" in the state A or the state B.

In reading information from the magneto-optic recording medium, the magneto-optic recording medium is irradiated with a laser beam of a power far smaller than that of the laser beam used for writing information, and the variation of the plane of polarization corresponding to the rotation of the plane of polarization of linearly polarized light caused by magneto-optic mutual action, i.e. the Kerr effect or Faraday effect, and the varying intensity of light, is converted into an electric output signal.

The thickness of the rare earth metal layer 15RE of the first magnetic thin film 11 and the second magnetic thin film 12 is in the range of 3.5 Å to 10.5 Å, which corresponds to the range of about the thickness of a one-atom layer to that of a three-atom layer. The thickness of the transition metal layer 15TM is in the range of 2.5 Å to 22.5 Å, which corresponds to the thickness range of about the thickness of a one-atom layer to that of a nine-atom layer.

Figure 5 shows the variation of the rare earth metal content of the first magnetic thin film 11 and the second magnetic thin film 12 with the ratio between the thickness of the rare earth metal layer 15RE and that of the transition metal layer 15TM, i.e. the ratio RE:TM between the thickness of the atomic layer of the rare earth metal layer 15RE and that of the atomic layer of the transition metal layer 15TM. For example, when the ratio Re:Tm = 1 : 1, namely when the rare earth metal layer 15RE has the thickness of a one-atom layer and the transition metal layer 15TM has the thickness of a one-atom layer, the rare earth metal content is 37% by weight. When the ratio RE:TM = 1 : 2, namely when the rare earth metal layer 15RE has the thickness of a one-atom layer and the transition metal layer 15TM has the thickness of a two-atom layer, the rare earth metal content is 21% by weight, and when the ratio RE:TM = 1 : 4, the rare earth metal content is about 14% by weight. Practically, in the periodic laminated construction of the rare earth metal layers 15RE and the transition metal layers 15TM, a desirable ratio RE:TM is in the range of 1 : 1 to 1 : 4, namely a desirable rare earth metal content of the first magnetic thin film 11 and the second magnetic thin film 12 is in the range of 14 to 37% by weight.

Figure 6 shows the relationship between the perpendicular coercive force $H_c$ and the rare earth metal content of the magnetic thin films 11 and 12.

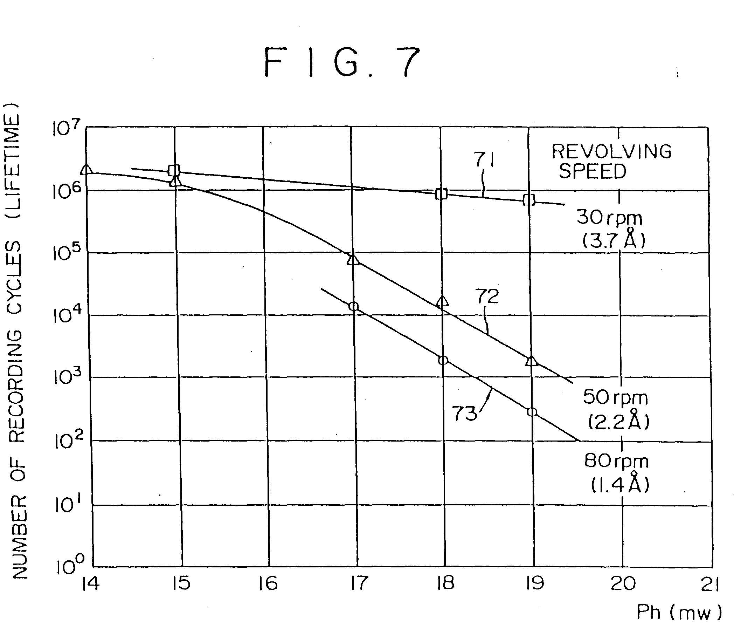

Figure 7 shows the measured number of possible recording cycles of a magneto-optic recording medium having the first magnetic thin film 11 of $TbFeCo_7Cr_4$ and the second magnetic thin film 12 of $GdTbFeCo_{30}Cr_4$ for the revolving speed of revolution in the direction of the arrow **b**, in which curves 71, 72, and 73 are for a revolving speed of 30 rpm and a rare earth metal layer 15RE of 3.7 Å, for a revolving speed of 50 rpm and a rare earth metal layer 15RE of 2.2 Å, and for a revolving speed of 80 rpm and a rare earth metal layer 15RE of 1.4 Å, respectively. It is considered that these magnetic thin films are not of the alternate laminated construction of transition metal layers and rare earth metal layers. Figure 7 shows the number of possible recording cycles representing the lifetime of the magneto-optic recording medium, measured by recording information in the recording mode described previously with reference to Figure 4, in which $H_{sub}$ = 6 kOe, $H_{ex}$ = 600 kOe, the power $P_L$ of the laser beam for heating the magneto-optic recording medium at the temperature $T_1$ in the first heated state, namely, for recording information represented by "0", was 6 mW, and the power $P_H$ of the laser beam for heating the magneto-optic recording medium at the temperature $T_2$ in the second heated state, namely, for recording information represented by "1", was varied. The lifetime is represented by the number of recording cycles performed at a bit error rate less than $1 \times 10^{-4}$. As is obvious from Figure 7, the lifetime of the magneto-optic recording medium in accordance with the present invention indicated by the curve 71 is far longer than those of the conventional magneto-optic recording media as comparative examples indicated by the curves 72 and 73, which is considered to be due to the improved resistance of the magnetic thin films 11 and 12 against thermal deterioration. Although a desirable value of the second temperature $T_2$ may be, for example, in the range of 250 to 300°C, the power $P_H$ is increased to increase the margin between the power $P_L$ and the power $P_H$. The heating temperature under such conditions is in a high range of 500 to 600°C. Although the amorphous magnetic thin films 11 and 12 are likely to be damaged and liable to crystallize at such a high heating temperature, the magnetic thin films 11 and 12 in accordance with the present invention are hard to crystallize, so that the lifetime of the magneto-optic recording medium in accordance with the present invention is extended.

A magnetic thin film having an appropriate number of fundamental atomic pairs of two atoms of the transition metal to one atom of the rare earth metal has excellent magnetic perpendicular anisotropy and magnetic stability. It is inferred that such a magnetic thin film can be formed when the thickness of the rare earth metal layer 15RE is in the range of 3.5 Å to 10.5 Å (one-atom to three-atom layer), the thickness of the transition metal layer 15TM is in the range of 2.5 Å to 22.5 Å (one-atom to nine-atom layer), and the rare earth metal content is in the range of 14 to 37% by weight.

The thickness of the rare earth metal layers 15RE and the transition metal layers 15TM was determined by measuring the small angle $2\theta$ scattering strength of X-ray diffraction.

Although the magneto-optic recording medium in accordance with the present invention shown in Figure 1 is provided with the intermediate layer 14 between the first magnetic thin film 11 and the second magnetic thin film 12 to determine the magnetic energy for the exchange coupling of the first magnetic thin film 11 and the second magnetic thin film 12, at least the first magnetic thin film 11 forming a memory layer of a magneto-optic recording medium shown in Figure 10 not provided with the intermediate layer 14, or desirably both the first magnetic thin film 11 forming the memory layer and the second magnetic thin film 12 similarly to those of the magneto-optic recording medium of Figure 1 may be of the alternate laminated construction of rare earth metal layers 15RE and transition metal layers 15TM.

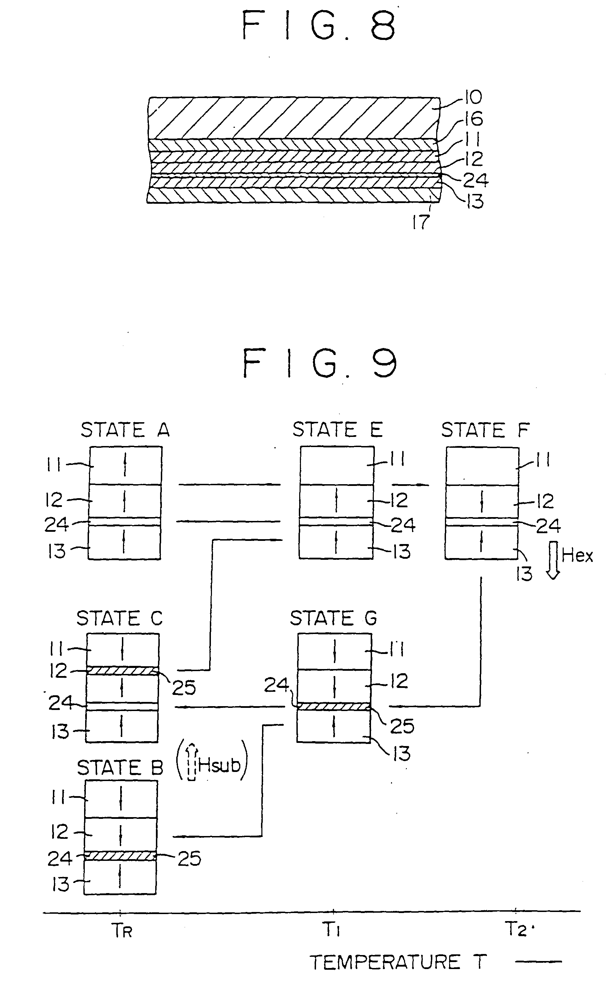

The present invention is applicable to a magneto-optic recording medium of a construction as shown in Figure 11. Figure 8 shows a magneto-optic recording medium in a second embodiment in accordance with the present invention having a construction similar to that of the magnetic recording medium shown in Figure 11. In Figure 8, films and layers like or corresponding to those shown in Figure 1 are denoted by the same reference characters. Referring to Figure 8, a magneto-optic recording medium has a first magnetic thin film 11 forming a memory layer, a second magnetic thin film 12 forming a recording layer, and a third magnetic thin film forming a magnetization holding film corresponding respectively to the magnetic thin films 1, 2, and 3 of the magneto-optic recording medium shown in Figure 11, and an intermediate layer 24 formed between the second magnetic thin film 12 and the third magnetic thin film 13. At least the first magnetic thin film 11 forming the memory layer, preferably the first magnetic thin film 11 and the second magnetic thin film 12 forming a recording layer, and more preferably the first magnetic thin film 11, the second magnetic thin film 12, and the third magnetic thin film 13, have an alternate laminated construction of rare earth metal layers 15RE of a thickness in the range of 3.5 Å to 10.5 Å and transition metal layers 15TM of a thickness in the range of 2.5 Å to 22.5 Å. The rare earth metal content of those magnetic thin films is in the range of 14 to 37% by weight.

The recording method disclosed in Japanese Patent Laid-open (Kokai) No. Sho 63-268103, incorporated herein, is applicable to recording information in this magneto-optic recording medium.

The first magnetic thin film 11, the second magnetic thin film 12, and the third magnetic thin film 13 may be either TM-rich films in which the sublattice magnetization of the transition metal is dominant, or RE-rich films in which the sublattice magnetization of the rare earth metal is dominant. For example, suppose that the first magnetic thin film 11 is a TM-rich film in the temperature range of a room temperature to its Curie temperature $T_{c1}$, the second magnetic thin film 12 is a TM-rich film in the temperature range of a room temperature to its Curie temperature $T_{c2}$, and the third magnetic thin film 13 is a RE-rich film in the temperature range of a room temperature to the first temperature $T_1$, and that the respective Curie temperatures of the first magnetic thin film 11, the second magnetic thin film 12, the third magnetic thin film 13, and the intermediate layer are $T_{c1}$, $T_{c2}$, $T_{c3}$, and $T_{c4}$, respectively.

The first magnetic thin film 11, the second magnetic thin film 12, the third magnetic thin film 13, and the intermediate layer 14 are formed so that

$$T_{c1} < T_{c2}$$
$$T_{c4} < T_{c2} \text{ and } T_{c3}$$
$$T_{c4} \leqq T_{c1}$$

The intermediate layer 24 has a minimum thickness sufficient to intercept the exchange coupling force between the second magnetic thin film 12 and the third magnetic thin film 13 at a temperature lower than the Curie temperature $T_{c4}$ of the intermediate layer 24.

In the initial state, the magneto-optic recording medium is in the state A, in which the respective directions of TM spin of the first magnetic thin film 11 and the second magnetic thin film 12 are normal, and the direction of TM spin of the third magnetic thin film 13 is the same as that of the first magnetic thin film 11 and the second magnetic thin film 12.

The magneto-optic recording medium in the state A at the room temperature $T_R$ is heated to a first temperature $T_1$ not lower than the Curie temperature $T_{c1}$ of the first magnetic thin film 11 and not high enough to cause the inversion of the direction of magnetization of the second magnetic thin film 12 by an external magnetic field $H_{ex}$. Alternatively, it is heated to a second temperature $T_2$ higher than the first temperature $T_1$, which is not lower than the Curie temperature $T_{c2}$ of the second magnetic thin film 12 and which is high enough to cause the inversion of the direction of TM sublattice magnetization of the second magnetic thin film by the external magnetic field $H_{ex}$.

When the temperature of the magneto-optic recording medium drops below the Curie temperature $T_{c1}$ of the first magnetic thin film 11 after the completion of heating of the magneto-optic recording medium to the

first temperature $T_1$ or to the second temperature $T_2$, the first magnetic thin film 11 is magnetized. The direction of magnetization of the first magnetic thin film 11 is dependent on the exchange coupling force between the first magnetic thin film 11 and the second magnetic thin film 12. That is, when the temperature of the magneto-optic recording medium drops below the Curie temperature $T_{c1}$ of the first magnetic thin film 11 after heating the magneto-optic recording medium at the first temperature $T_1$, or the second temperature $T_2$, the magneto-optic recording medium is set in either the state A or the state B, in which the directions of magnetization of the first magnetic thin film 11 and the second magnetic thin film 12 are the same as shown in Figure 9. If the magneto-optic recording medium is heated to the first temperature $T_1$, the magneto-optic recording medium is set in the state A after the same has been cooled to a temperature below the Curie temperature $T_{c1}$ of the first magnetic thin film 11. If the magneto-optic recording medium is heated to the temperature $T_2$, the magneto-optic recording medium is set in the state B after the same has been cooled to a temperture below the Curie temperature $T_{c1}$ of the first magnetic thin film 11.

Referring to Figure 9, when heated at the first temperature $T_1$, the magneto-optic recording medium is set in a state E, in which the first magnetic thin film 11 is demagnetized. As stated above, when the temperature of the magneto-optic recording medium drops below the Curie temperature $T_{c1}$ of the first magnetic thin film 11, the magneto-optic recording medium is set in the state A and the direction of the TM sublattice magnetization of the first magnetic thin film 11 is turned in the direction of the TM sublattice magnetization of the second magnetic thin film 12 by the exchange coupling force of the second magnetic thin film 12 to record, for example, information represented by "0". When heated to the second temperature $T_2$, the magneto-optic recording medium is set in a state F, in which the first magnetic thin film 11 and the second magnetic thin film 12 are demagnetized or their magnetization is reduced, and the direction of TM sublattice magnetization of the second magnetic thin film 12 is inverted by the external magnetic field $H_{ex}$. In the state F, an exchange coupling force between the second magnetic thin film 12 and the third magnetic thin film is intercepted by the intermediate layer 24, and hence the respective directions of TM sublattice magnetization of the second magnetic thin film 12 and the third magnetic thin film 13 are reverse to each other. When the temperature of the magneto-optic recording medium drops near to the Curie temperature $T_{c1}$ of the first magnetic thin film 11, the magneto-optic recording medium is set in a state G, and TM sublattice magnetization of the first magnetic thin film 11 of the same direction as that of TM sublattice magnetization of the second magnetic thin film 12 is caused by the exchange coupling force of the second magnetic thin film 12. That is, the direction of TM sublattice magnetization of the first magnetic thin film 11 in the state A is inverted. An interfacial magnetic domain wall 25 is created in the intermediate layer 24 formed between the second magnetic thin film 12 and the third magnetic thin film 13, because the respective directions of sublattice magnetization of the second magnetic thin film 12 and the third magnetic thin film 13 are reverse to each other. When the magneto-optic recording medium in the state G is cooled further to the room temperature $T_R$, the magneto-optic recording medium is set in the state B or the state C, depending on the conditions for expressions (1) and (2) shown below. Thus, the direction of TM sublattice magnetization of the first magnetic thin film 11 is inverted to record, for example, information represented by "1".

Since the respective directions of TM sublattice magnetization, i.e. TM spin, of the first magnetic thin file 11 and the second magnetic thin film 12 are reverse to each other in the state C, an interfacial magnetic domain wall 25 is created between the first magnetic thin film 11 and the second magnetic thin film 12. The transition of the state of the magneto-optic recording medium from the state G to the state B or from the state G to the state C is dependent on conditions for expressions (1) and (2). Suppose that $h_4 \ll h_2$ and $h_3$, and $M_{s4} \cdot H_{c4} \ll M_{s2} \cdot H_{c2}$ and $M_{s3} \cdot H_{c3}$, where $h_2$, $h_3$ and $h_4$ are the thickness, $M_{s2}$, $M_{s3}$, and $M_{s4}$ are the magnetization, and $H_{c1}$, $H_{c3}$ and $H_{c4}$ are the coercive force of the second magnetic thin film 12, the third magnetic thin film and the intermediate layer 24, respectively, and that $\sigma_{w1}$ is the interfacial domain wall energy density between the first magnetic thin film 11 and the second magnetic thin film 12, and $\sigma_{w2}$ is the interfacial domain wall energy density between the second magnetic thin film 12 and the third magnetic thin film 13. Then, conditions for not inverting the direction of magnetization of the third magnetic thin film 13 is expressed by:

$$\sigma_{w2} - 2M_{s2} \cdot h_3 \cdot H_{ex} < 2M_{s3} \cdot h_3 \cdot H_{c3} \qquad (1)$$

Conditions for transition from the state G to the state C is expressed by:

$$\sigma_{w2} - \sigma_{w1} - 2M_{s2} \cdot h_2 \cdot H_{ex} > 2M_{s2} \cdot h_2 \cdot H_{c2} \qquad (2)$$

Conditions for transition from the state G to the state B is expressed by:

$$\sigma_{w2} - \sigma_{w1} - 2M_{s2} \cdot h_2 \cdot H_{ex} < 2M_{s2} \cdot h_2 \cdot H_{c2} \qquad (3)$$

Accordingly, if conditions satisfy both expressions (1) and (2), the magneto-optic recording medium can be set in the state C at room temperature only by the external magnetic field $H_{ex}$, without using any other external magnetic field.

If both expressions (1) and (3) are not satisfied, an auxiliary external magnetic field $H_{sub}$ of a direction corresponding to the normal direction in the initial state is necessary for the transition of the state from the state B to the state C at the room temperature shown in Figure 9.

When the magneto-optic recording medium is set in the state C, the respective directions of magnetization, i.e. the directions of TM spin of the second magnetic thin film 12 and the third magnetic thin film 13, are the same as those in the initial state A, i.e. the normal direction. Accordingly, overwrite is enabled by temperature modulation according to information to be written, because transition from the state C to the state E occurs, similarly to transition from the initial state to the state E, in heating the magneto-optic recording medium to the first temperature $T_1$ or to the second temperature $T_2$ according to information to be written.

As is apparent from the foregoing description, according to the present invention, the memory layer in particular of the magneto-optic recording medium comprising at least the first magnetic thin film 11 forming the memory layer, and the second magnetic thin film 12 forming the recording layer, is further stabilized. Accordingly, the magneto-optic recording medium ensures high-temperature recording and has high reliability and extended lifetime.

Although the invention has been described in its preferred forms with a certain degree of particularity, many changes and variations are possible therein. It is therefore to be understood that the present invention may be practiced otherwise than as specifically described herein without departing from the scope and spirit thereof.

**Claims**

1. A magneto-optic recording medium comprising:

   an amorphous rare earth metal-transition metal thin film serving as a first magnetic thin film (11) forming a memory layer,
   an amorphous rare earth metal-transition metal thin film serving as a second magnetic thin film (12) forming a recording layer which is magnetically coupled with the first magnetic thin film (11), and
   wherein said memory layer (11), and said recording layer (12) are formed sequentially in that order above a substrate (10),

   **characterized in that**
   at least the first (11) magnetic thin film consisting of Tb, Fe, Co, Cr has a laminated construction (15RE, 15TM) of an alternating arrangement of rare earth metal layers each having a thickness in a range of 0.35 nm to 1.05 nm and transition metal layers each having a thickness in a range of 0.25 nm to 2.25 nm;

the second magnetic thin film (12) consists of Gd, Tb, Fe, Co, Cr; and the rare earth metal content is in the range of 14 to 37 % by weight.

2. A magneto-optic recording medium according to claim 1 wherein an intermediate layer (14) is formed between said memory layer and said recording layer, said intermediate layer consisting of $GdFeCo_7Cr_4$.

3. A magneto-optic recording medium according to claim 2, wherein a dielectric layer (16), said memory layer, said intermediate layer, said recording layer, and a protective layer (17) are formed sequentially in that order on said substrate.

4. A magneto-optic recording medium according to claim 1 further comprising:

   a magnetization holding film (13),
   wherein said memory layer (11), said recording layer (12), and said magnetization holding film (13) are formed sequentially in that order above a substrate (10).

5. A magneto-optic recording medium according to claim 4, further comprising an intermediate layer (24) formed between said recording layer and said magnetization holding film.

6. A magneto-optic recording medium according to claim 4 or 5, wherein $T_{c1} < T_{c2}$; $T_{c4} < T_{c2}$, and $T_{c3}$; and $T_{c4} \leq T_{c1}$; where $T_{c1}$, $T_{c2}$, $T_{c3}$ and $T_{c4}$ are Curie temperatures of the magnetic thin film memory layer (11), recording layer (12), magnetization holding film (13), and intermediate layer (14).

7. A magneto-optic recording medium according to claim 4 or 5 or 6, further comprising a dielectric layer (16) formed between said substrate (10) and said memory layer (11), and a protective layer (17) formed on said magnetization holding film (13).

8. A magneto-optic recording medium according to any of the claims 4 to 7, wherein said magnetization holding film has a laminated construction (15RE, 15TM) of an alternating arrangement of rare earth metal layers each having a thickness in a range of 0.35 nm to 1.05 nm and transition metal layers each having a thickness in a range of 0.25 nm to 2.25 nm.

9. A method of recording information on the recording medium according to any of the claims 1 to 3, wherein recording of information represented by "0" comprises the steps of:

   irradiating the magneto-optic recording medium with a laser beam to heat the magneto-optic recording medium at a temperature $T_1$ not lower than the Curie temperature $T_{c1}$ of the first magnetic thin film (11) and not high enough to cause the inversion of the direction of magnetization of the second magnetic thin film (12) by an external magnetic field $H_{ex}$,

cooling the magneto-optic recording medium below the Curie temperature $T_{c1}$ of the first magnetic thin film (11) after the completion of heating, and

wherein recording of information represented by "1" comprises the steps of:

applying an external magnetic field H ex to the magneto-optic recording medium,

irradiating the magneto-optic recording medium with a laser beam to heat the magneto-optic recording medium at a temperature $T_2$ not lower than the first temperature $T_1$ and high enough to cause the inversion of the direction of magnetization of the second magnetic thin film (12) by the external magnetic field $H_{ex}$,

cooling the magneto-optic recording medium below the Curie temperature $T_{c1}$ of the first magnetic thin film (11) after the completion of heating, and

applying an auxiliary external magnetic field $H_{sub}$ to the magneto-optic recording medium at a temperature near the room temperature $T_R$ to invert the direction of magnetization of the second magnetic thin film (12).

10. A method of recording information on the recording medium according to any of the claims 4 to 8 wherein recording of information represented by "0" comprises the steps of:

irradiating the magneto-optic recording medium with a laser beam to heat the magneto-optic recording medium at a temperature $T_1$ not lower than the Curie temperature $T_{c1}$ of the first magnetic thin film (11) and not high enough to cause the inversion of the direction of magnetization of the second magnetic thin film (12) by an external magnetic field $H_{ex}$,

cooling the magneto-optic recording medium below the Curie temperature $T_{c1}$ of the first magnetic thin film (11) after the completion of heating, and

wherein recording of information represented by "1" comprises the steps of:

applying an external magnetic field $H_{ex}$ to the magneto-optic recording medium,

irradiating the magneto-optic recording medium with a laser beam to heat the magneto-optic recording medium at a temperature $T_2$ higher than the first temperature $T_1$, which is not lower than the Curie temperature $T_{c2}$ of the second magnetic thin film (12) and which is high enough to cause the inversion of the direction of magnetization of the second magnetic thin film (12) by the external magnetic field $H_{ex}$,

cooling the magneto-optic recording medium below the Curie temperature $T_{c1}$ of the first magnetic thin film (11) after the completion of heating, and

either further cooling the magneto-optic recording medium to the room temperature $T_R$, if the following conditions are satisfied

(1) $\sigma_{w2} - 2 M_{s3} h_3 H_{ex} < 2 M_{s3} h_3 H_{c3}$

and

(2) $\sigma_{w2} - \sigma_{w1} - 2 M_{s2} h_2 H_{ex} > 2 M_{s2} h_2 H_{c2}$,

or applying an auxiliary external magnetic field $H_{sub}$ to the magneto-optic recording medium at a temperature near the room temperature $T_R$ to invert the direction of magnetization of the second magnetic thin film (12), if the following conditions are satisfied

(1) $\sigma_{w2} - 2 M_{s3} h_3 H_{ex} < 2 M_{s3} h_3 H_{c3}$

and

(3) $\sigma_{w2} - \sigma_{w1} - 2 M_{s2} h_2 H_{ex} < 2 M_{s2} h_2 H_{c2}$.

**Patentansprüche**

1. Magnetooptischer Aufzeichnungsträger mit:

- einem amorphen Seltenerdmetall-Übergangsmetall-Dünnfilm, der als erster, eine Speicherschicht bildender magnetischer Dünnfilm (11) dient;
- einem amorphen Seltenerdemetall-Übergangsmetall-Dünnfilm, der als zweiter magnetischer Dünnfilm (12) dient, der eine Aufzeichnungsschicht bildet, die magnetisch mit dem ersten magnetischen Dünnfilm (11) gekoppelt ist; und
- wobei die Speicherschicht (11) und die Aufzeichnungsschicht (12) in dieser Reihenfolge aufeinanderfolgend auf einem Substrat (10) ausgebildet sind;

**dadurch gekennzeichnet, dass**

- zumindest der erste magnetische Dünnfilm (11), der aus Tb, Fe, Co, Cr besteht, einen Laminataufbau (15SE, 15ÜM) aus einer abwechselnden Anordnung aus Seltenerdmetallschichten mit jeweils einer Dicke im Bereich von 0,35 nm bis 1,05 nm sowie Übergangsmetallschichten mit jeweils einer Dicke von 0,25 nm bis 2,25 nm aufweist;

- der zweite magnetische Dünnfilm (12) aus Gd, Tb, Fe, Co, Cr besteht und der Seltenerdmetallgehalt im Bereich von 14 bis 37 Gewichts-% liegt.

2. Magnetooptischer Aufzeichnungsträger nach Anspruch 1, bei dem zwischen der Speicherschicht und der Aufzeichnungsschicht eine Zwischenschicht (14) ausgebildet ist, die aus $GdFeCo_7Cr_4$ besteht.

3. Magnetooptischer Aufzeichnungsträger nach Anspruch 2, bei dem eine dielektrische Schicht (16), die Speicherschicht, die Zwischenschicht, die Aufzeichnungsschicht, sowie eine Schutzschicht (17) in dieser Reihenfolge aufeinanderfolgend auf dem Substrat ausgebildet sind.

4. Magnetooptischer Aufzeichnungsträger nach Anspruch 1, ferner mit einem Magnetisierungsaufrechterhaltungsfilm (13), wobei die Speicherschicht (11), die Aufzeichnungsschicht (12) und die Magnetisierungsaufrechterhaltungsschicht (13) in dieser Reihenfolge aufeinanderfolgend auf einem Substrat (10) ausgebildet sind.

5. Magnetooptischer Aufzeichnungsträger nach Anspruch 4, ferner mit einer Zwischenschicht (24), die zwischen der Aufzeichnungsschicht und dem Magnetisierungaufrechterhaltungsfilm ausgebildet ist.

6. Magnetooptischer Aufzeichnungsträger nach einem der Ansprüche 4 oder 5, bei dem $T_{c1} < T_{c2}$, $T_{c4} < T_{c2}$ und $T_{c3}$ sowie $T_{c4} \leq T_{c1}$ gelten, wobei $T_{c1}$, $T_{c2}$, $T_{c3}$ und $T_{c4}$ die Curietemperaturen der magnetischen Dünnfilm-Speicherschicht (11), der Aufzeichnungsschicht (12), des Magnetisierungsaufrechterhaltungsfilms (13) und der Zwischenschicht (14) sind.

7. Magnetooptischer Aufzeichnungsträger nach einem der Ansprüche 4, 5 oder 6, ferner mit einer dielektrischen Schicht (16), die zwischen dem Substrat (10) und der Speicherschicht (11) ausgebildet ist, und mit einer auf dem Magnetisierungsaufrechterhaltungsfilm (13) ausgebildeten Schutzschicht (17).

8. Magnetooptischer Aufzeichnungsträger nach einem der Ansprüche 4 bis 7, bei dem der Magnetisierungsaufrechterhaltungsfilm einen Laminataufbau (15SE, 15ÜM) aus einer abwechselnden Anordnung aus Seltenerdmetallschichten mit jeweils einer Dicke im Bereich von 0,35 nm bis 1,05 nm sowie Übergangsmetallschichten mit jeweils einer Dicke im Bereich von 0,25 nm bis 2,25 nm aufweist.

9. Verfahren zum Aufzeichnen von Information auf dem Aufzeichnungsträger gemäß einem der Ansprüche 1 bis 3,

- wobei das Aufzeichnen von durch "0" repräsentierter Information die folgenden Schritte umfasst:

-- Bestrahlen des magnetooptischen Aufzeichnungsträgers mit einem Laserstrahl zum Erwärmen desselben auf eine Temperatur $T_1$ nicht unter der Curietemperatur $T_{c1}$ des ersten magnetischen Dünnfilms (11) und nicht ausreichend hoch dafür, dass durch ein externes Magnetfeld $H_{ex}$ eine Umkehrung der Magnetisierungsrichtung des zweiten magnetischen Dünnfilms (12) hervorgerufen wird;

-- Abkühlen des magnetooptischen Aufzeichnungsträgers unter die Curietemperatur $T_{c1}$ des ersten magnetischen Dünnfilms (11) nach Abschluss der Erwärmung; und

- wobei das Aufzeichnen von durch "1" repräsentierter Information die folgenden Schritte umfasst:

-- Anlegen eines externen Magnetfelds $H_{ex}$ an den magnetooptischen Aufzeichnungsträger;

-- Bestrahlen des magnetooptischen Aufzeichnungsträgers mit einem Laserstrahl, um ihn auf eine Temperatur $T_2$ zu erwärmen, die nicht niedriger als die erste Temperatur $T_1$ und ausreichend hoch dafür ist, dass durch das externe Magnetfeld $H_{ex}$ Umkehrung der Magnetisierungsrichtung des zweiten magnetischen Dünnfilms (12) hervorgerufen wird;

-- Abkühlen des magnetooptischen Aufzeichnungsträgers unter die Curietemperatur $T_{c1}$ des ersten magnetischen Dünnfilms (11) nach Abschluss des Erwärmens; und

-- Anlegen eines externen Hilfsmagnetfelds $H_{sub}$ an den magnetooptischen Aufzeichnungsträger bei einer Temperatur nahe der Raumtemperatur $T_R$, um die Magnetisierungsrichtung des zweiten magnetischen Dünnfilms (12) umzukehren.

10. Verfahren zum Aufzeichnen von Information auf dem Aufzeichnungsträger gemäß einem der Ansprüche 4 bis 8,

- wobei das Aufzeichnen von durch "0" repräsentierter Information die folgenden Schritte umfasst:

-- Bestrahlen des magnetooptischen Aufzeichnungsträgers mit einem Laserstrahl zum Erwärmen desselben auf eine Temperatur $T_1$ nicht unter der Curietemperatur $T_{c1}$ des ersten magnetischen Dünnfilms (11) und nicht ausreichend hoch dafür, dass durch ein externes Magnetfeld $H_{ex}$ eine Umkehrung der Magnetisierungsrichtung des zweiten magnetischen Dünnfilms (12) hervorgerufen wird;

-- Abkühlen des magnetooptischen Aufzeichnungsträgers unter die Curietemperatur $T_{c1}$ des ersten magnetischen Dünnfilms (11) nach Abschluss der Erwärmung; und

- wobei das Aufzeichnen von durch "1" repräsentierter Information die folgenden Schritte umfasst:

-- Anlegen eines externen Magnetfelds $H_{ex}$ an den magnetooptischen Aufzeichnungsträger;

-- Bestrahlen des magnetooptischen Aufzeichnungsträgers mit einem Laserstrahl, um ihn auf eine Temperatur $T_2$ zu erwärmen, die höher als die erste Temperatur $T_1$ ist, die nicht niedriger als die Curietemperatur $T_{c2}$ des zweiten magnetischen Dünnfilms (12) ist und die ausreichend hoch dafür ist, dass durch das externe Magnetfeld $H_{ex}$ eine Umkehrung der Magnetisierungsrichtung des zweiten magnetischen Dünnfilms (12) hervorgerufen wird;

-- der magnetooptische Aufzeichnungsträger nach Abschluss des Erwärmens unter die Curietemperatur $T_{c1}$ des ersten ersten magnetischen Dünnfilms (12) abgekühlt wird; und

$$(1)\ \sigma_{w2} - 2M_{s3}h_3H_{ex} < 2M_{s3}h_3H_{c3}$$

und

$$(2)\ \sigma_{w2} - \sigma_{w1} - 2M_{s2}h_2H_{ex} > 2M_{s2}h_2H_{c2};$$

-- oder bei einer Temperatur nahe der Raumtemperatur $T_R$ ein externes Hilfsmagnetfeld $H_{sub}$ an den magnetooptischen Aufzeichnungsträger angelegt wird, um die Magnetisierungsrichtung des zweiten magnetischen Dünnfilms (12) umzukehren, wenn die folgenden Bedingungen erfüllt sind:

$$(1)\ \sigma_{w2} - 2M_{s3}h_3H_{ex} < 2M_{s3}h_3H_{c3}$$

und

$$(3)\ \sigma_{w2} - \sigma_{w1} - 2M_{s2}h_2H_{ex} < 2M_{s2}h_2H_{c2}.$$

## Revendications

1. Support d'enregistrement magnéto-optique comprenant :

- un film mince amorphe de métal de transition/métal de terre rare servant de premier film mince magnétique (11) formant une couche de mémoire;

- un film mince amorphe de métal de transition/métal de terre rare servant de second film mince magnétique (12) formant une couche d'enregistrement qui est couplée, de façon magnétique, au premier film mince magnétique (11); et

dans lequel ladite couche de mémoire (11) et ladite couche d'enregistrement (12) sont formées, de façon séquentielle, dans cet ordre au dessus d'un support (10);

support caractérisé en ce qu'au moins le premier film mince magnétique (11) constitué de Tb, Fe, Co, Cr présente une structure stratifiée (15RE, 15TM) d'un agencement alterné de couches de métal de terre rare possédant chacune une épaisseur comprise entre 0,35 nm et 1,05 nm et de couches de métal de transition possédant chacune une épaisseur comprise entre 0,25 nm et 2,25 nm; le second film mince magnétique (12) est constitué de Gd, Tb, Fe, Co, Cr et la proportion de métal de terre rare est comprise entre 14 et 37 % en poids.

2. Support d'enregistrement magnéto-optique selon la revendication 1, dans lequel une couche intermédiaire (14) est formée entre ladite couche de mémoire et ladite couche d'enregistrement, ladite couche intermédiaire étant constituée de $GdFeCo_7Cr_4$.

3. Support d'enregistrement magnéto-optique selon la revendication 2, dans lequel une couche de diélectrique (16), ladite couche de mémoire, ladite couche intermédiaire, ladite couche d'enregistrement et une couche de protection (17) sont formées, de façon séquentielle, dans cet ordre sur ledit support.

4. Support d'enregistrement magnéto-optique selon la revendication 1, comprenant, de plus, un film de maintien de magnétisation (13), support dans lequel ladite couche de mémoire (11), ladite couche d'enregistrement (12) et ledit film de maintien de magnétisation (13) sont formés, de façon séquentielle, dans cet ordre au dessus d'un support (10).

5. Support d'enregistrement magnéto-optique selon la revendication 4, comprenant, de plus, une couche intermédiaire (24) formée entre ladite couche d'enregistrement et ledit film de maintien de magnétisation.

6. Support d'enregistrement magnéto-optique selon la revendication 4 ou 5, dans lequel $T_{c1} < T_{c2}$; $T_{c4} < T_{c2}$ et $T_{c3} < T_{c1}$ où $T_{c1}$, $T_{c2}$; $T_{c3}$ et $T_{c4}$ sont les températures de point de Curie de la couche de mémoire à film mince magnétique (11), de la couche d'enregistrement (12), du film de maintien de magnétisation (13) et de la couche intermédiaire (14).

7. Support d'enregistrement magnéto-optique selon la revendication 4 ou 5 ou 6, comprenant, de plus, une couche de diélectrique (16) formée entre ledit support (10) et ladite couche de mémoire (11), et une couche de protection (17) formée sur ledit film de maintien de magnétisation (13).

8. Support d'enregistrement magnéto-optique selon l'une quelconque des revendications 4 à 7, dans lequel ledit film de maintien de magnétisation présente une structure stratifiée (15RE, 15TM) d'un agencement alterné de couches de métal de terre rare possédant chacune une épaisseur comprise entre 0,35 nm et 1,05 nm et de couches de métal de transition possédant chacune une épaisseur comprise entre 0,25 nm et 2,25 nm.

9. Procédé pour l'enregistrement d'une information sur le support d'enregistrement magnéto-optique selon l'une quelconque des revendications 1 à 3, selon lequel l'enregistrement d'une information représentée par "0" comprend les étapes suivantes :

- l'émission sur le support d'enregistrement magnéto-optique d'un faisceau laser afin de chauffer le support d'enregistrement magnéto-optique à une température $T_1$ ne descendant pas en dessous de la température de point de Curie $T_{c1}$ du premier film mince magnétique (11) et non suffisante pour provoquer l'inversion de la direction de magnétisation du second film mince magnétique (12) par un champ magnétique

externe $H_{ex}$;
- le refroidissement du support d'enregistrement magnéto-optique en dessous de la température de point de Curie $T_{c1}$ du premier film mince magnétique (11) après la fin du chauffage; et

selon lequel l'enregistrement d'une information représentée par "1" comprend les étapes suivantes :

- l'application d'un champ magnétique externe $H_{ex}$ au support d'enregistrement magnéto-optique;
- l'émission sur le support d'enregistrement magnéto-optique d'un faisceau laser afin de chauffer le support d'enregistrement magnéto-optique à une température $T_2$ ne descendant pas en dessous de la première température $T_1$ et assez grande pour provoquer l'inversion de la direction de magnétisation du second film mince magnétique (12) par le champ magnétique externe $H_{ex}$;
- le refroidissement du support d'enregistrement magnéto-optique en dessous de la température de point de Curie $T_{c1}$ du premier film mince magnétique (11) après la fin du chauffage; et
- l'application d'un champ magnétique externe auxiliaire $H_{sub}$ au support d'enregistrement magnéto-optique à une température proche de la température ambiante $T_R$ afin d'inverser la direction de magnétisation du second film mince magnétique (12).

10. Procédé pour l'enregistrement d'une information sur le support d'enregistrement magnéto-optique selon l'une quelconque des revendications 4 à 8, selon lequel l'enregistrement d'une information représentée par "0" comprend les étapes suivantes :

- l'émission sur le support d'enregistrement magnéto-optique d'un faisceau laser afin de chauffer le support d'enregistrement magnéto-optique à une température $T_1$ ne descendant pas en dessous de la température de point de Curie $T_{c1}$ du premier film mince magnétique (11) et non suffisante pour provoquer l'inversion de la direction de magnétisation du second film mince magnétique (12) par un champ magnétique externe $H_{ex}$;
- le refroidissement du support d'enregistrement magnéto-optique en dessous de la température de point de Curie $T_{c1}$ du premier film mince magnétique (11) après la fin du chauffage; et

selon lequel l'enregistrement d'une information représentée par "1" comprend les étapes suivantes :

- l'application d'un champ magnétique externe $H_{ex}$ au support d'enregistrement magnéto-optique;

- l'émission sur le support d'enregistrement magnéto-optique d'un faisceau laser afin de chauffer le support d'enregistrement magnéto-optique à une température $T_2$ supérieure à la première température $T_1$ qui n'est pas inférieure à la température de point de Curie $T_{c2}$ du second film mince magnétique (12) et qui est assez grande pour provoquer l'inversion de la direction de magnétisation du second film mince magnétique (12) par le champ magnétique externe $H_{ex}$;

- le refroidissement du support d'enregistrement magnéto-optique en dessous de la température de point de Curie $T_{c1}$ du premier film mince magnétique (11) après la fin du chauffage; et

- soit le refroidissement supplémentaire du support d'enregistrement magnéto-optique à la température ambiante $T_R$ si les conditions suivantes sont satisfaites :

$$\sigma_{w2} - 2M_{s2}.h_3.H_{ex} < 2M_{s3}.h_3.H_{c3} \qquad (1)$$

et

$$\sigma_{w2} - \sigma_{w1} - 2M_{s2}.h_2.H_{ex} > 2M_{s2}.h_2.H_{c2} \qquad (2)$$

- soit l'application d'un champ magnétique externe auxiliaire $H_{sub}$ au support d'enregistrement magnéto-optique à une température proche de la température ambiante $T_R$ pour inverser la direction de magnétisation du second film mince magnétique (12) si les conditions suivantes sont satisfaites :

$$\sigma_{w2} - 2M_{s2}.h_3.H_{ex} < 2M_{s3}.h_3.H_{c3} \qquad (1)$$

et

$$\sigma_{w2} - \sigma_{w1} - 2M_{s2}.h_2.H_{ex} < 2M_{s2}.h_2.H_{c2} \qquad (3).$$

# F I G. 1

# F I G. 2

15RE RARE EARTH METAL LAYER

15TM TRANSITION METAL LAYER

15RE

15TM

# F I G. 3

# F I G. 4

# F I G. 5

RARE EARTH METAL CONTENT ( % BY WEIGHT )

THICKNESS OF THE RARE EARTH METAL-
TRANSITION METAL LAYER (Å)

RE:TM   1:1   1:2   1:3   1:4

# F I G. 6

COERCIVE FORCE .Hc

RE/(RE+TM)

14%   37%

RARE EARTH METAL CONTENT
( % BY WEIGHT )

F I G. 7

# F I G. 8

# F I G. 9

# F I G. 10  (PRIORT ART)

10
1
2

# F I G. 11  (PRIORT ART)

10
1
2
3

# F I G. 12  (PRIORT ART)

10
1
4
2